# EUROPEAN PATENT SPECIFICATION

(11) **EP 3 430 020 B1**
(45) Date of publication and mention of the grant of the patent: **28.07.2021**
(21) Application number: 17711076.4
(22) Date of filing: 20.02.2017
(51) Int. Cl.: C07F 9/6561

(54) **A PREPARATION METHOD OF DIASTEREOMERICALLY PURE TENOFOVIR ALAFENAMIDE OR ITS SALTS**
VERFAHREN ZUR HERSTELLUNG VON DIASTEREOMERENREINEM TENOFOVIRALAFENAMID ODER SALZEN DAVON
PROCÉDÉ DE PRÉPARATION DE TÉNOFOVIR ALAFÉNAMIDE DIASTÉRÉOMÉRIQUEMENT PUR OU DE SES SELS

(30) Priority: 17.03.2016 CZ 20160156
(43) Date of publication of application: 23.01.2019
(73) Proprietor: Zentiva K.S., 102 37 Praha 10 (CZ)
(72) Inventor: STEFKO, Martin, 851 01 Bratislava (CZ); MAN, Stanislav, 687 32 Nezdenice (CZ)
(74) Representative: Ellis, Robin Patrick
(86) International application number: PCT/CZ2017/000009
(87) International publication number: WO 2017/157352

(56) References cited:
- WO-A2-2015/107451
- US-A1- 2013 090 473

## Description

### Field of the invention

The invention relates to an efficient preparation method of diastereomerically pure Tenofovir Alafenamide (TA) of structure **1a** with the absolute configuration (*S*) at the phosphorus atom - ***S*ₚ-diastereoisomer_{.}**

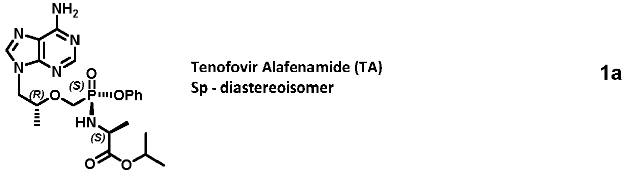

Tenofovir Alafenamide Fumarate of formula 2 (TAF) is a reverse transcriptase inhibitor, which is currently in the clinical study stage as a prodrug of Tenofovir 3 for the treatment of HIV infection and hepatitis B. Compared to the hitherto used prodrug, Tenofovir disoproxil fumarate of formula **4,** TAF exhibits greater antiviral activity and better distribution in the lymphatic system.

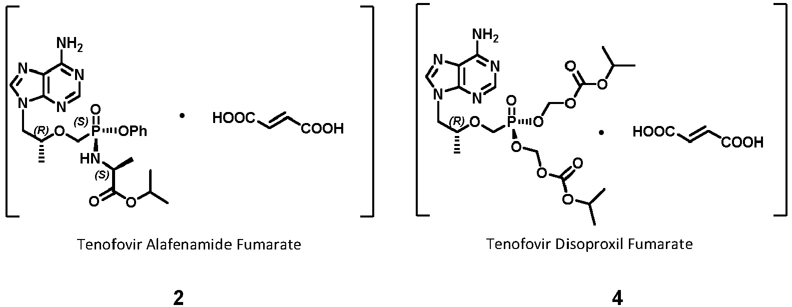

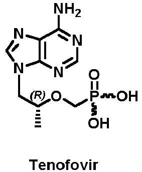

### Background Art

The so far most advantageous preparation methods of Tenofovir Alafenamide of formula **1a** are based on a reaction of a chloride precursor (*R*ₚ diastereoisomer of formula **5a**) with isopropyl L-alaninate of formula 6, both in the free base form and in the form of the respective salt with hydrochloric acid. The reaction runs in a stereospecific way, by means of the S_{N}2 mechanism with the inversion of the configuration at the chiral phosphorus atom. And it is just this S_{N}2 mechanism that makes it possible to use a reaction of the diastereomerically pure intermediate of formula **5a** (Rp diastereoisomer) to prepare diastereomerically pure Tenofovir Alafenamide of formula **1a,** or its salt. There is also a rule that a mixture of the chlorides of formula **5a** and 5b having a particular diastereoisomer ratio provides a mixture of Tenofovir alafenamide diastereoisomers of formula **1a** and **1b** having the same ratio. 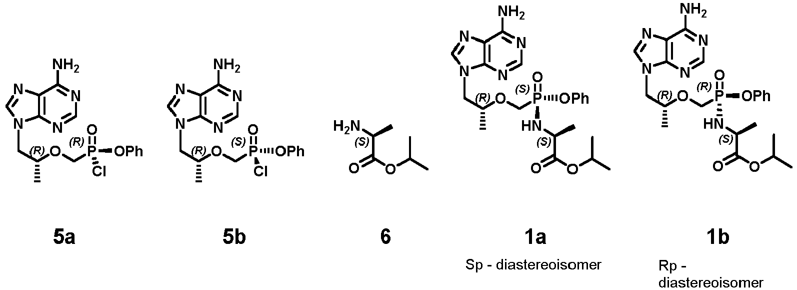 Literature essentially describes three preparation strategies of diastereomerically pure Tenofovir Alafenamide of formula **1a.**

The first strategy (WO 2014/195724) uses a process of cleavage of the diastereomers of formula **1a** and **1b** by forming a salt with a chiral acid (**K**). The salt with tartaric acid has proved to be the most suitable one. The diastereoisomeric salts with tartaric acid of formula **1a*K** and **1b*K** obtained this way can be subsequently separated by crystallization while the use of L- or D- tartaric acid leads, after releasing of the bases, to the possibility to prepare the respective Sp (of formula **1a)** or Rp (of formula **1b)** diastereomer of TA. (Scheme 1). The main disadvantages of the above described process mainly include the loss of 50% of the mass in the form of the diastereoisomeric salt of the undesired isomer of formula **1b*K.** But also the time demands and laboriousness of the process related to the necessity to prepare the respective salt, to crystallize it and to subsequently release the diastereomerically pure free base of TA of formula **1a.**

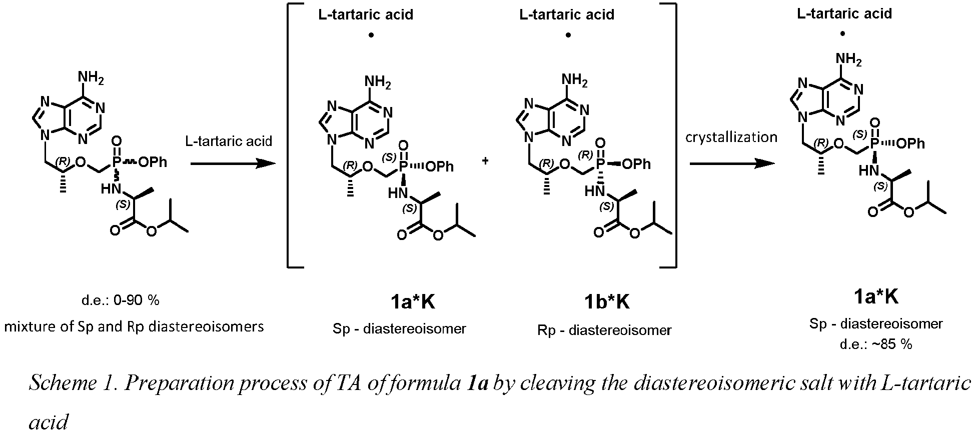

The second process (according to the basic patent WO0208241 as well as WO2013052094) uses preparation of the diastereomerically pure/enriched (d.e. > 80%) chloride of formula **5a**. The reaction employs Ph-PMPA of **formula 8** as the input raw material, which is subjected to chlorination, producing the chlorides of formula **5a** and **5b.** Their ratio in the mixture can be modified by adjusting the reaction conditions while a mixture with d.e.: > 80% can be obtained. A subsequent reaction of the mixture enriched this way with isopropyl L-alaninate **6** provides a mixture of formula **1a** and **1b** with d.e.: > 80%. Diastereomerically pure Tenofovir Alafenamide of formula **1a** can be obtained from the mixture by crystallization or by means of chromatography (Scheme 2).

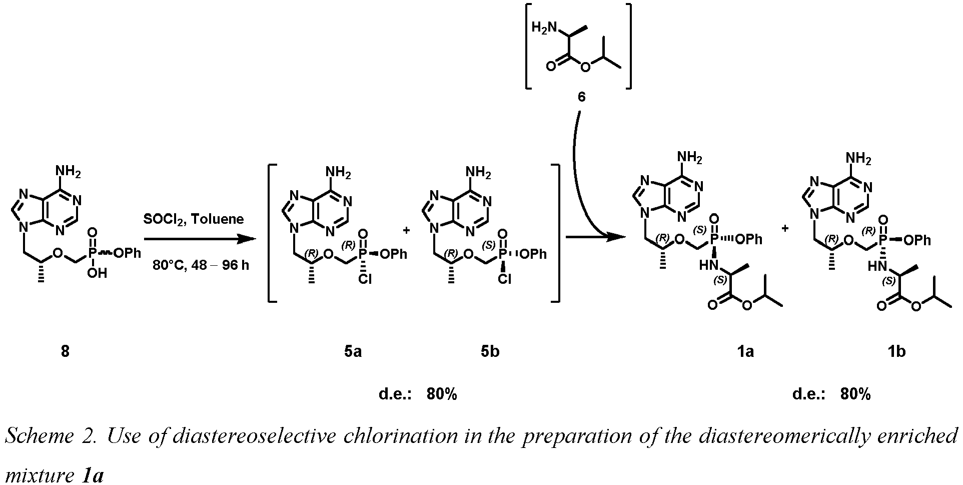

The third option envisages using crystallization-induced dynamical resolution (CIDR) under the conditions disclosed in WO2013052094, which uses a reaction of a phenol under the catalytic action of DBU. This way, in a mixture containing the isomers of formula **1a** and **1b** (having the composition of 1a/1b 99:1 to 1:99), the representation of the unwanted isomer of formula **1b** can be reduced by its conversion with the use of CIDR to the desired isomer **1a.** However, the efficiency of CIDR is not absolute, which only provides the option to prepare a diastereomerically enriched mixture having d.e.: ∼ 85% (if the input mixture was a mixture containing the isomers in the ratio of **1a/1b** of 1:1). Diastereomerically pure Tenofovir Alafenamide of formula **1a** can be obtained from the mixture by crystallization or by means of chromatography. (Scheme 3)

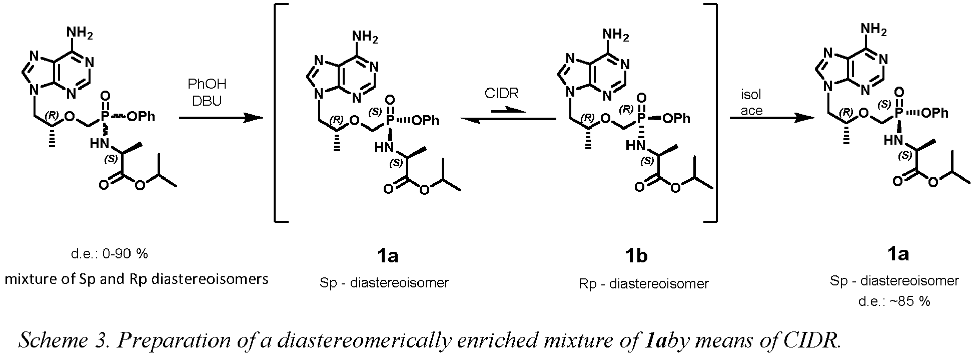

US 2013/0090473 A1 relates to methods for preparing anti-viral nucleotide analogs.WO 2015/107451 A2 relates to the purification of tenofovir alafenamide and its intermediates.

### Disclosure of the Invention

The object of this invention is an improved production method of biologically active phosphoramidate prodrugs, especially TENOFOVIR ALAFENAMIDE of formula **1a.** This new synthetic strategy uses good availability of diastereoisomerically pure phosphoramidate precursors of formula 7 (where X is the leaving group such as: F, Cl, Br, I, OTs, OMs etc.) as the key intermediates of the industrial production of TENOFOVIR ALAFENAMIDE of formula **1a** (Scheme 4).

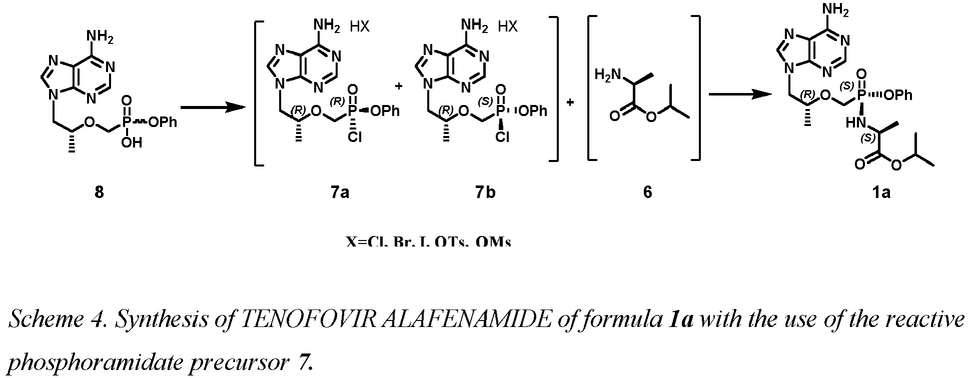

This invention is based on a surprising observation that the reactive phosphoramidate intermediate as a mixture of the diastereoisomers of formula **7a** and **7b** tends to crystallize directly from the reaction media under suitably selected reaction conditions (solvent, co-solvent, concentration, agitation, temperature, reaction time, auxiliary substances), namely in the form of the respective salt enriched with the *R*ₚ diastereomer **7a.** The reaction related to crystallization can be generally carried out in a aprotic solvente.g. MeOAc, EtOAc, *n*PrOAc, *i*PrOAc, and *n*BuOAc or in various polar solvents (e.g. sulfolane, acetonitrile, propionitrile and others).

According to the invention there is provided a method for preparing the diastereomerically enriched chloride of formula 7 as an intermediate of the synthesis of Tenofovir Alafenamide of formula **1a,** based on a reaction of the compound of formula **8** (Ph-PMPA) with SOCl₂, characterized in that the reaction is performed in a mixed solvent, which is composed of a mixture of the polar solvent S1 in which the compound of formula 7 is partly soluble, i.e. 0 mg/ml < solubility ≤ 10 mg/ml, and the polar aprotic solvent S2 in which the compound of formula 7 is very well soluble, i.e. 10 ≥ x mg / ml, wherein the ratio of the volumes of the solvents S2 to S1 is in the range of 0.01 ≤ *S*2:*S*1 ≤0.20, wherein S1 is a polar solvent selected from MeOAc, EtOAc, *n*PrOAc, iPrOAc and *n*BuOAc; and wherein S2 is a polar aprotic solvent selected from dimethyl sulfone, propionitrile, 1,3-dimethyl-2-imidazolidinone, *N,N'-*dimethylpropylene urea and sulfolane.

If for the preparation of the mixture of the salts of formula **7a** and **7b** a chlorination or generally halogenation agent is used (e.g. thionyl chloride, dichloro-oxalate and others with possible activation by addition of DMF), first a suspension of the mixture of the diastereoisomers of formula **7a** and **7b** in the ratio of ∼ 1: 1 is produced. Further heating then causes enrichment of the mixture with the salt of the diastereomer **7a.** All the volatile constituents are removed from the salt prepared this way usually by distillation at a reduced pressure (halogenation agents and the solvent) or repeated partial evaporation of the solvent (halogenation agents). Other isolation possibilities consist in filtering or decantation.

What is important during the reaction is to prevent the formation of the free bases of formula **5a** and **5b,** which are easily subject to secondary, especially condensation reactions. The production of salts as e.g. chlorides can be supported by introduction of dry gaseous hydrogen chloride or a hydrogen chloride solution in a suitable solvent into the reaction mixture. Another option of supporting the production of salts consists in adding water into the reaction mixture (e.g. in the form of a wet solvent or wet input material as Ph-PMPA), which then reacts with the excess of the chlorination / halogenation agent, releasing a sufficient quantity of hydrogen chloride / hydrogen halide.

The formation of the salts is also equally important to enrich the reaction mixture with the desired isomer of formula **7a.** The diastereomer of formula **7a** is obtained from the diastereomer of formula **7b** (or possibly vice versa) due to the crystallization-induced dynamic resolution (CIDR). This process is completely independent of the used chlorination / halogenation agent because it can run as an autocatalytic process catalyzed by the salts of formula **7a** and **7b.** CIDR can be also carried out without the presence of a chlorination / halogenation agent, wherein the mixture of the salts of the diastereomers of formula **7a** and **7b** is first separated from the reaction mixture and it is subsequently subjected to CIDR. The autocatalytic process can be supported by addition of especially salts of tertiary and quaternary ammonium salts (especially triethylammonium chloride, benzytrimethylammonium chloride, cetyltrimethylammonium bromide, pyridinum chloride, 2,6-lutidine hydrochloride and more), or free bases (triethylamine (TEA), pyridine, 2,6-lutidine, ethyldiisopropylamine (EDIPA), 1,8-Diazabicyclo[5.4.0]undec-7-ene (DBU), 1,5-Diazabicyclo[4.3.0]non-5-ene (DBN), which are converted to the salts *in situ.* The quantity of the base in relation to the compound of formula 7 is 1:1 to 1 : 10, preferably 1.0 : 4.0.

CIDR runs best at elevated temperatures (over 50°C) in aprotic solvents in which the salts of formula **7a** and **7b** are soluble to a limited extent (0 mg/mL < solubility ≤ 10 mg/mL). Suitable solvents are MeOAc, EtOAc, *n*PrOAc, *i*PrOAc, and *n*BuOAc. The solubility can be further adjusted by addition of so-called co-solvents, which are polar aprotic solvents (e.g. sulfolane, dimethyl sulfone, propionitrile, 1,3 dimethyl-2-imidazolidinone, *N,N*'-dimethylpropylene urea. The function of the addition of the co-solvents is usually to slightly increase the solubility of the salts of formula **7a** and **7b** in the reaction mixture to reduce the time necessary to shift the balance towards the diastereomer **7a.**

Conversely, if the chlorination / halogenation is carried out in solvents where the salts of formula **7a** and **7b** are well soluble, even after long heating (for days) the mixture does not get enriched with one of the diastereomers and their ratio remains 1:1. Such a situation usually occurs if polar solvents are used as e.g. sulfolane, dimethyl sulfone, acetonitrile, propionitrile, 1,3 dimethyl-2-imidazolidinone, *N,N*'-dimethylpropylene urea etc.

If crystallization of the reaction mixture occurs (due to cooling, increasing the concentration, inoculation with crystals or addition of an anti-solvent), the reaction mixture gets enriched with the diastereomer of formula **7a.** Thus, the enrichment with the diastereomer of formula **7a** gets stabilized at the d.e. values between 20 - 80% at the room temperature without further heating. As an example of an anti-solvent e.g. MeOAc, EtOAc, *n*PrOAc, *i*PrOAc, *n*BuOAc, substituted and unsubstituted aliphatic and aromatic hydrocarbons as e.g. cyclohexane, heptane, benzene, toluene, xylene isomers, mesitylene, α,α,α-trifluorotoluene, chlorobenzene, benzonitrile and others can be mentioned.

If the suspension enriched with the diastereomer of formula **7a** is converted to a solution (by heating, dilution or addition of a suitable solvent), after a short time (usually 1 - 20 min), the ratio of the diastereoisomers gets stabilized at the ratio of formula **7a/7b** of ∼ 1:1.

The subsequent reaction of the chloride of formula **7a** (or **7b**) with a nucleophile (in this case with isopropyl-L-alaninate) runs in a stereospecific way through the S_{N}2 mechanism with an inversion of the configuration at the chiral phosphorus atom. It is just this S_{N}2 mechanism that requires preparation of the intermediate of formula **7a** in the highest possible diastereomeric purity, which is then transferred to the final product, tenofovir alafenamide (TA) of formula **1a.**

The crude diastereomerically enriched (d.e. ≤ 70%) Tenofovir Alafenamide of formula **1a** prepared this way must be isolated and purified in the subsequent steps so that it can meet the API quality requirements, which means achieving both the chemical and optical purity (d.e. 99.7%) in this case. For this purpose, the initially described procedures can be employed, especially:
- chiral chromatography,
- chromatography (RP, SiO₂...
- crystallization in the stage of free base of TA
- conversion to a salt with a chiral or achiral acid and subsequent cleavage of the salt obtained this way etc.

A reaction of the diastereomerically enriched intermediate of formula **7a** (d.e. ≤ 70%) with isopropyl-L-alaninate of formula **6** provides diastereomerically enriched Tenofovir Alafenamide of formula **1a** (d.e. ≤ 70%) while if the subsequent reaction is carried out experimentally correctly (strictly anhydrous conditions), d.e. of the intermediate of formula **7a** is transferred to the product of formula **1a.** The diastereomerically enriched intermediate of formula 7 reacts with the compound of formula **6** at a molar ratio in the range of 1:1 to 1:5, in a preferred embodiment 1:2 to 1:4.

It was surprisingly found out that isopropyl-L-alaninate of formula 6 in the free base form is stable at the laboratory conditions (25°C) for at least 1 month. Thus, using the compound of formula **6** in the free base form facilitates handling (dosing) as well as isolation of the product of formula **1a.** (The reaction mixture does not get salinized as in case of using the respective salt of isopropyl-L-alaninate of formula **6**). This modified procedure can be employed to prepare, in a suitable solvent or mixture of solvents and a reaction temperature of -40 to +20°C, preferably -20 to 5°C, diastereomerically enriched TA of formula **1a** in the yield of 80% by weight, chemical purity of 75% and optical purity d.e. of 70%. Suitable solvents for the above mentioned reaction are especially carboxylic acid esters (e.g. MeOAc, EtOAc, *n*PrOAc, *i*PrOAc, *n*BuOAc and more), or aliphatic and aromatic hydrocarbons, both substituted and unsubstituted (e.g. cyclohexane, heptane, benzene, toluene, xylene isomers, mesitylene, α,α,α-trifluorotoluene, chlorobenzene, benzonitrile and others). The solubility can be further adjusted by addition of so-called co-solvents, which are usually polar aprotic solvents (e.g. sulfolane, dimethyl sulfone, acetonitrile, propionitrile, 1,3 dimethyl-2-imidazolidinone, *N,N*'-dimethylpropylene urea and others).

Thus, according to the invention there is also provided a method for preparing the compound of formula 1a, characterized in that it comprises a reaction of the diastereomerically enriched salt of the chloroderivative of formula **7** with the compound of formula 6, wherein the method for preparing the diastereomerically enriched salt of the chloroderivative of formula 7 is according to the method described above. Preferably, the reaction of the diastereomerically enriched salt of the chloroderivative of formula **7** prepared according to the method described above with the compound of formula **6** is in a polar aprotic solvent, selected from MeOAc, EtOAc, nPrOAc, iPrOAc and nBuOAc, or in their mixture, at the temperatures of -20 to +5°C.

Unexpectedly good results of isolation and purification were achieved with the use of isopropyl acetate (*i*PrOAc) as the solvent. The main advantage of the procedure using iPrOAc is direct separation of the target *S*p diastereoisomer of TA of formula **1a** by means of crystallization. E.g. a single crystallization of crude Tenofovir Alafenamide base of formula **1a** with the HPLC purity of 75% and d.e. of 70% can provide material with the HPLC purity of 90% and d.e. of 96% at the yield of 80%. A subsequent crystallization of such a diastereomerically enriched mixture makes it possible to prepare the product of formula **1a** with the HPLC purity of 98%, d.e. of 99% and crystallization yield of 90%. The final recrystallization provides TENOFOVIR ALAFENAMIDE base of formula **1a** in the API quality (i.e. HPLC purity of 99.8%, d.e. of 99.7% and recrystallization yield of 95%).

In addition, it was found out that execution of the reaction of Ph-PMPA of formula 8 with SOCl₂ in iPrOAc in the presence of 1 to 20% of sulfolane (tetrahydrothiophene-1,1-dioxide) can provide the intermediate of formula 7 with an excess of the compound of formula **7a** in the yield of 95% by weight and with d.e. of 70% after 24 h already at the temperature of 80°C. The subsequent reaction of the compound of formula **7a** with **6** runs in iPrOAc very efficiently at the temperatures of -20 to +5°C. Immiscibility of the organic solvent, preferably *i*PrOAc, enables aqueous processing of the reaction mixture, which results in elimination of inorganic and polar impurities. A clear advantage of iPrOAc as a solvent that is immiscible with water is the possibility to remove water from the organic fraction after the extraction by means of azeotropic distillation so that the product can be directly crystallized from the reaction mixture - the so-called "one-pot" processing.

A suitable arrangement of the experiment then allows you to employ aqueous processing of the reaction mixture to transfer the by-products of the reaction - PMPA as well as the unreacted Ph-PMPA of formula **8** into the aqueous phase, the product in the form of a mixture of the isomers of formula **1a** and **1b** remaining in the organic layer, which after the elimination of the water residues by means of azeotropic distillation represents the input raw material of the next technological stage, namely crystallization.

From the technological point of view, for feasibility of the reaction on the industrial scale the use of a single solvent throughout the synthesis and crystallization is highly desirable. In addition, the solvent iPrOAc is considered as a "green solvent" with an allowed high limit of its residual content in the final API (5000 ppm). Since the entire process uses just one solvent without a volatile admixture, it is easy to recycle, which is an advantage from the industrial production point of view.

The main advantage of above described procedure as compared to prior art procedures is direct separation of the target Sp diastereoisomer of formula **1a** by means of crystallization. This procedure makes it possible to obtain the *S*p diastereoisomer of tenofovir alafenamide of formula **1a** in high total yields (>50%) and an API-compliant optical purity (>99.7% d.e.) from the crude reaction mixture (Scheme 5).

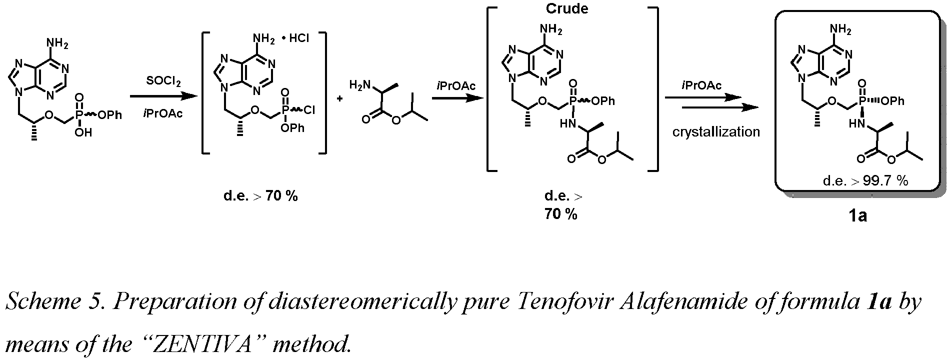

### Preparation of tenofovir alafenamide of formula 1a

To a suspension of Ph-PMPA 8 (1.47g, 4.05 mmol) in iPrOAc (25 mL) thionyl chloride (0.7 mL, 10.11 mmol, 2.5 equiv) was added and the reaction mixture was stirred at 80°C for 2h. Then, sulfolane (2.2 mL) was added and the resulting mixture was stirred at 80°C for 24 - 72 h (until d.e. of 70% was achieved). After cooling to the room temperature, the volatile constituents were removed by distillation at a reduced pressure (45°C, 10 mbar). The obtained mixture of the chlorides of formula **7a/7b** was suspended in iPrOAc (25 mL) and added during 1 h to a cooled (-20°C) solution of *i*Pr-L-alanine (2.65g, 20.23 mmol, 5 equiv) in iPrOAc (15 mL). The reaction was stirred for 1h at -20°C, and then after heating for 1h at 20°C. The reaction mixture was washed with an aqueous solution of NaH₂PO₄, aqueous solution of KHCO₃, water and a saturated solution of NaCl and further dried over Na₂SO₄. The resulting solution was concentrated to the volume of 15 mL, inoculated with TA of formula **1a** and left to crystallize at the room temperature. The product was aspirated on frit, washed with cold iPrOAc and dried in a vacuum drier (40°C, 200 Pa) for 8 h, providing 1.3 g (68%) of Tenofovir Alafenamide of formula **1a** in the form of white powder (chemical purity 95%, d.e. 70%).

Tenofovir Alafenamide (chemical purity 95%, d.e. 70%) was dissolved at 85°C in iPrOAc (5 mL/mmol), cooled during 2h to 22°C and stirred at 22°C for 2h. The product was aspirated on frit, washed with cold iPrOAc and dried in a vacuum drier (40°C, 200 Pa) for 8 h, providing Tenofovir Alafenamide in the yield of 92% and d.e. of 99.0%.

Tenofovir alafenamide (d.e. 99.0%) was dissolved at 85°C in iPrOAc (5 mL/mmol), cooled during 2h to 22°C and stirred at 22°C for 2h. The product was aspirated on frit, washed with cold iPrOAc and dried in a vacuum drier (40°C, 200 Pa) for 8 h, providing Tenofovir Alafenamide of formula **1a** in the yield of 95% and d.e. of 99.8%.

¹H NMR (500 MHz, DMSO) δ = 8.12 (d, *J* = 16.6 Hz, 2H), 7.29 (t, *J* = 7.9 Hz, 2H), 7.23 (s, 2H), 7.13 (t, *J* = 7.4 Hz, 1H), 7.04 (d, *J* = 8.4 Hz, 2H), 5.69 - 5.61 (m, 1H), 4.84 (hept, *J* = 6.3 Hz, 1H), 4.27 (dd, *J* = 14.4, 3.6 Hz, 1H), 4.14 (dd, *J* = 14.4, 6.6 Hz, 1H), 3.97 - 3.90 (m, 1H), 3.90 - 3.81 (m, 2H), 3.76 (dd, *J* = 13.4, 9.8 Hz, 1H), 1.15 (d, *J* = 6.3 Hz, 6H), 1.12 (d, *J* = 7.1 Hz, 3H), 1.06 (d, *J* = 6.2 Hz, 3H) ppm.
¹³C NMR (126 MHz, DMSO) δ = 172.92, 172.89, 155.99, 152.44, 150.26, 150.19, 149.80, 141.40, 129.50, 124.36, 120.57, 120.54, 118.39, 75.55, 75.45, 67.91, 64.75, 63.52, 49.07, 46.84, 21.45, 21.42, 20.34, 20.30, 16.66 ppm.
³¹P NMR (202 MHz, DMSO) δ = 22.11 ppm.

### Preparation of the mixture of the salts of formula 7a and 7b

A mixture of Ph-PMPA (1.45 g) with SOCl₂ (3 equivalents) in a solvent or combination of solvents (16 mL) was heated up to 75°C. After the reaction time indicated in the table below, the reaction mixture was evaporated at a reduced pressure. The evaporation product provided a mixture of the salts of the diastereomers of formula **7a** and **7b** as specified in the table below (determined by means of HPLC after derivatization with pyrrolidine). The content of Cl in the product (usually in the range of 16 - 17%) was determined by titration. The experiment with *i*PrOAc/sulfolane is according to the invention; all other experiments are comparative.

| **solvent** | Representation of **7a/7b** | | |
|---|---|---|---|
| | **2 h** | **1 d** | **2 d** |
| MeCN | 50 / 50 | 49 / 51 | 49 / 51 |
| Sulfolane | 49 / 51 | 49 / 51 | 49 / 51 |
| *n*BuCl | 50 / 50 | 61 / 39 | 73 / 27 |
| MeOAc | 65 / 35 | 82 / 18 | 85 / 15 |
| EtOAc | 53 / 47 | 75 / 25 | 82 / 18 |
| *i*PrOAc | 50 / 50 | 76 / 24 | 86 / 14 |
| *n*BuOAc | 50 / 50 | 71 / 29 | 84 / 16 |
| THF | 64 / 36 | 81 / 19 | 89 / 11 |
| Me-THF | 52 / 48 | 80 / 20 | 86 / 14 |
| CHCl₃ | 69 / 31 | 64 / 36 | 80 / 20 |
| Cyclohexane | 51 / 49 | 68 / 32 | 81 / 19 |
| Toluene | 52 / 48 | 72 / 28 | 80 / 20 |
| Xylenes | 51 / 49 | 60 / 40 | 74 / 26 |
| Ph-CF₃ | 50 / 50 | 68 / 32 | 72 / 28 |
| 1,3-Dimethyl-2-imidazolidinone | 49 / 51 | 49 / 51 | 49 / 51 |
| Dibasic ester | 56 / 44 | 83 / 17 | 87 / 13 |
| *i*PrOAc / sulfolane 95/5 | 52 / 48 | 86 / 14 | 93 / 7 |
| *i*PrOAc / MeCN 80/20 | 51 / 49 | 85 / 15 | 92 / 8 |

## Claims

1. A method for preparing the diastereomerically enriched chloride of formula **7** as an intermediate of the synthesis of Tenofovir Alafenamide of formula 1**a,** 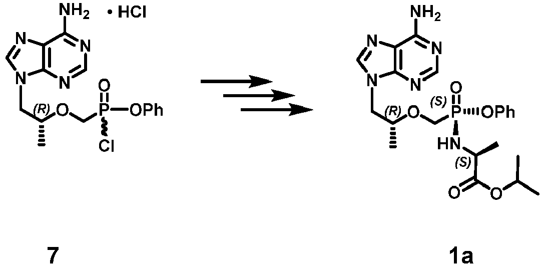 based on a reaction of the compound of formula 8 (Ph-PMPA) with SOCl₂, **characterized in that** the reaction is performed in a mixed solvent, which is composed of a mixture of the polar solvent S 1 in which the compound of formula 7 is partly soluble, i.e. 0 mg/ml < solubility ≤ 10 mg/ml, and the polar aprotic solvent S2 in which the compound of formula 7 is very well soluble, i.e. 10 ≥ x mg / ml, wherein the ratio of the volumes of the solvents S2 to S1 is in the range of 0.01 ≤ *S*2:*S*1 ≤0.20, wherein S1 is a polar solvent selected from MeOAc, EtOAc, nPrOAc, iPrOAc and nBuOAc, and wherein S2 is a polar aprotic solvent selected from dimethyl sulfone, propionitrile, 1,3-dimethyl-2-imidazolidinone, *N,N*'-dimethylpropylene urea and sulfolane.

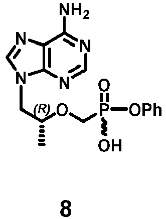

2. The method of preparing according to claim 1, **characterized in that** the mixed solvent is composed of a mixture of iPrOAc / sulfolane = 95/5 and the reaction with SOCl₂ is carried out at 80°C for 48 hours.

3. A method for preparing the compound of formula **1a**, 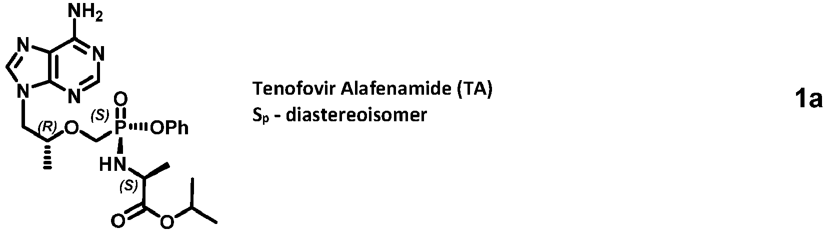 **characterized in that** it comprises a reaction of the diastereomerically enriched salt of the chloroderivative of formula **7** with the compound of formula **6**, wherein the method for preparing the diastereomerically enriched salt of the chloroderivative of formula 7 is according to claim 1.

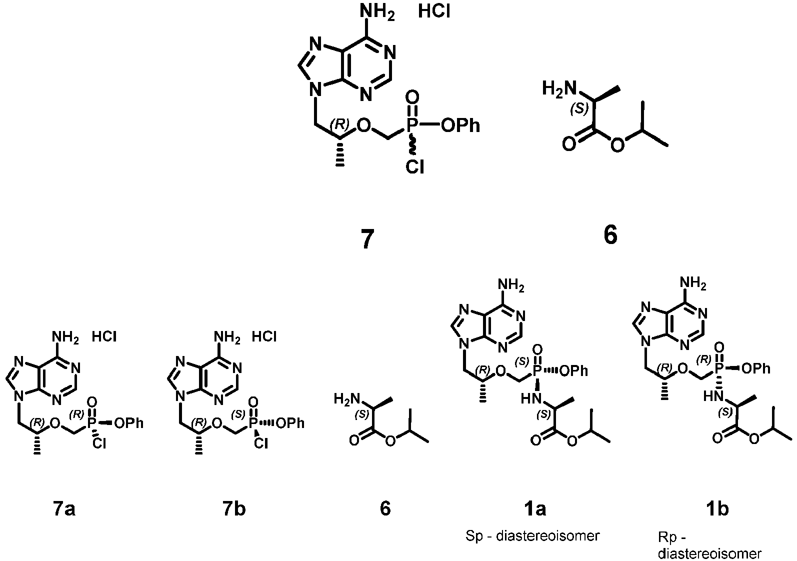

4. The method of claim 3, wherein the reaction of the diastereomerically enriched salt of the chloroderivative of formula **7** prepared according to the method of claim 1 with the compound of formula **6** is in a polar aprotic solvent, selected from MeOAc, EtOAc, nPrOAc, *i*PrOAc and *n*BuOAc, or in their mixture, at the temperatures of -20 to +5°C.

5. The method of preparing according to claim 3 or 4, **characterized in that** the diastereomerically enriched intermediate **7** is reacted with the compounds of formula **6** in the presence of a base.

6. The method of preparing according to claim 5, **characterized in that** the base is a tertiary amine.

7. The method of preparing according to claim 6, **characterized in that** the tertiary amine is selected from the group of triethylamine-TEA, ethyldiisopropylamine-EDIPA, 1,8-Diazabicyclo[5.4.0]undec-7-ene-DBU, or 1,5-Diazabicyclo[4.3.0]non-5-ene-DBN, preferably triethylamine-TEA.

8. The method of preparing according to claims 5 to **7**, **characterized in that** the amount of the base in relation to the compound of formula **7** is 1:1 to 1:10, preferably 1.0 : 4.0.

9. The method of preparing according to claim 4, **characterized in that** the product of formula **1a** is isolated by crystallization from a polar aprotic solvent selected from the group of carboxylic acid esters, which are MeOAc, EtOAc, *n*PrOAc, *i*PrOAc, or *n*BuOAc.

10. The method of preparing according to claim 9, **characterized in that** the solvent is *i*PrOAc.

## Patentansprüche

1. Verfahren zur Herstellung des diastereomer angereicherten Chlorids von Formel 7 als Intermediat der Synthese von Tenofoviralafenamid von Formel **1a** 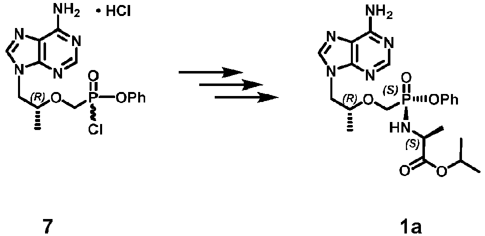 auf der Basis einer Reaktion der Verbindung von Formel 8 (Ph-PMPA) mit SOCl₂, **dadurch gekennzeichnet, dass** die Reaktion in einem Lösungsmittelgemisch erfolgt, das aus einem Gemisch aus dem polaren Lösungsmittel S1, in dem die Verbindung von Formel 7 teilweise löslich ist, d.h. 0 mg/ml < Löslichkeit ≤ 10 mg/ml, und dem polaren aprotischen Lösungsmittel S2, in dem die Verbindung von Formel 7 sehr gut löslich ist, d.h. 10 ≥ x mg/ml, besteht, wobei das Volumenverhältnis zwischen den Lösungsmitteln S2 und S1 im Bereich von 0,01 ≤ S2:S1 ≤ 0,20 liegt, wobei S1 ein polares Lösungsmittel ist, das aus MeOAc, EtOAc, nPrOAc, iPrOAc und nBuOAc ausgewählt ist, und wobei S2 ein polares aprotisches Lösungsmittel ist, das aus Dimethylsulfon, Propionitril, 1,3-Dimethyl-2-imidazolidinon, *N*,*N*'-Dimethylpropylenharnstoff und Sulfolan ausgewählt ist

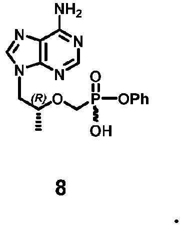

2. Verfahren zur Herstellung nach Anspruch 1, **dadurch gekennzeichnet, dass** das Lösungsmittelgemisch aus einem Gemisch aus *i*PrOAc/Sulfolan = 95/5 besteht und die Reaktion mit SOCl₂ 48 Stunden lang bei 80°C durchgeführt wird.

3. Verfahren zur Herstellung der Verbindung von Formel **1a** 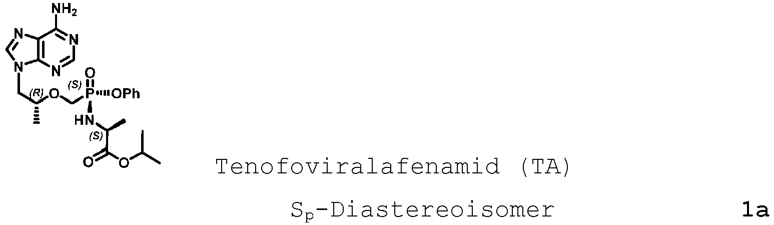 **dadurch gekennzeichnet, dass** es eine Reaktion des diastereomer angereicherten Salzes des Chlorderivats von Formel 7 mit der Verbindung von Formel 6 beinhaltet, wobei das Verfahren zur Herstellung des diastereomer angereicherten Salzes des Chlorderivats von Formel 7 Anspruch 1 entspricht:

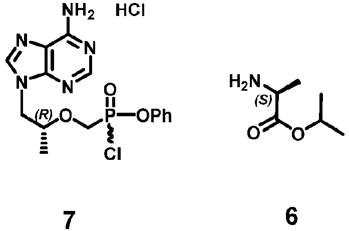

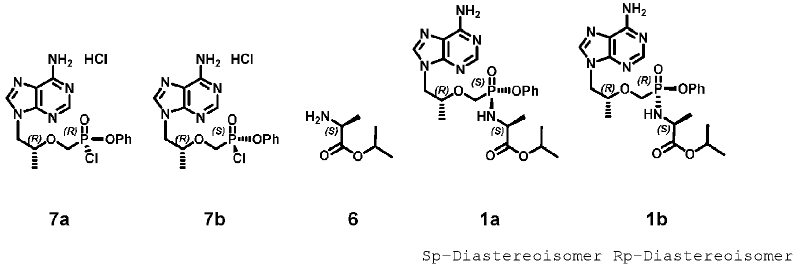

4. Verfahren nach Anspruch 3, wobei die Reaktion des diastereomer angereicherten Salzes des Chlorderivats von Formel 7, das mit dem Verfahren nach Anspruch 1 hergestellt wird, mit der Verbindung von Formel 6 in einem polaren aprotischen Lösungsmittel, ausgewählt aus MeOAc, EtOAc, nPrOAc, iPrOAc und nBuOAc, oder in ihrem Gemisch, bei einer Temperatur von -20 bis +5°C erfolgt.

5. Verfahren zur Herstellung nach Anspruch 3 oder 4, **dadurch gekennzeichnet, dass** das diastereomer angereicherte Intermediat 7 mit den Verbindungen von Formel 6 in Anwesenheit einer Base zur Reaktion gebracht wird.

6. Verfahren zur Herstellung nach Anspruch 5, **dadurch gekennzeichnet, dass** die Base ein tertiäres Amin ist.

7. Verfahren zur Herstellung nach Anspruch 6, **dadurch gekennzeichnet, dass** das tertiäre Amin aus der Gruppe bestehend aus Triethylamin-TEA, Ethyldiisopropylamin-EDIPA, 1,8-Diazabicyclo[5.4.0]undec-7-en-DBU oder 1,5-Diazabicyclo[4.3.0]non-5-en-DBN, vorzugsweise Triethylamin-TEA, ausgewählt wird.

8. Verfahren zur Herstellung nach den Ansprüchen 5 bis 7, **dadurch gekennzeichnet, dass** die Menge der Base im Verhältnis zur Verbindung von Formel 7 1:1 bis 1:10, vorzugsweise 1,0:4,0, beträgt.

9. Verfahren zur Herstellung nach Anspruch 4, **dadurch gekennzeichnet, dass** das Produkt von Formel 1a durch Kristallisation aus einem polaren aprotischen Lösungsmittel, ausgewählt aus der Gruppe bestehend aus Carbonsäureestern, die MeOAc, EtOAc, nPrOAc, iPrOAc oder nBuOAc sind, isoliert wird.

10. Verfahren zur Herstellung nach Anspruch 9, **dadurch gekennzeichnet, dass** das Lösungsmittel iPrOAc ist.

## Revendications

1. Procédé de préparation du chlorure diastéréomériquement enrichi de la formule 7 en tant qu'intermédiaire de la synthèse de ténofivir alafénamide de la formule la, 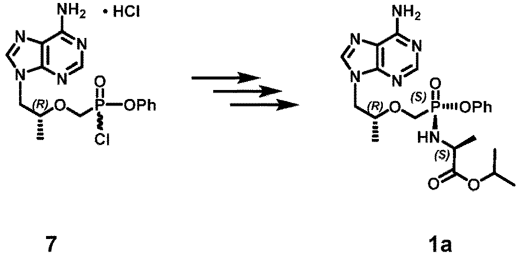 sur la base d'une réaction du composé de la formule 8 (Ph-PMPA) avec du SOCl₂, **caractérisé en ce que** la réaction est effectuée dans un mélange de solvants, qui est composé d'un mélange du solvant polaire S1 dans lequel le composé de la formule 7 est partiellement soluble, c-à-d. 0 mg/ml < solubilité ≤ 10 mg/ml, et du solvant aprotique S2 dans lequel le composé de la formule 7 est très bien soluble, c-à-d. 10 ≥ x mg/ml, dans lequel le rapport des volumes des solvants S2 à S1 est dans la plage de 0,01 ≤ *S*2:*S*1 ≤ 0,20, dans lequel S1 est un solvant polaire sélectionné parmi MeOAc, EtOAc, nPrOAc, iPrOAc et nBuOAc, et dans lequel S2 est un solvant aprotique sélectionné parmi de la diméthylsulfone, du propionitrile, de la 1,3-diméthyl-2-imidazolidinone, de l'urée de *N,N*'-diméthylpropylène et du sulfolane.

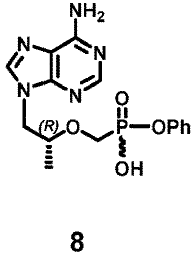

2. Procédé de préparation selon la revendication 1, **caractérisé en ce que** le mélange de solvants est composé d'un mélange d'iPrOAc/sulfolane = 95/5 et la réaction avec du SOCl₂ est effectuée à 80 °C pendant 48 heures.

3. Procédé de préparation du composé de la formule la, 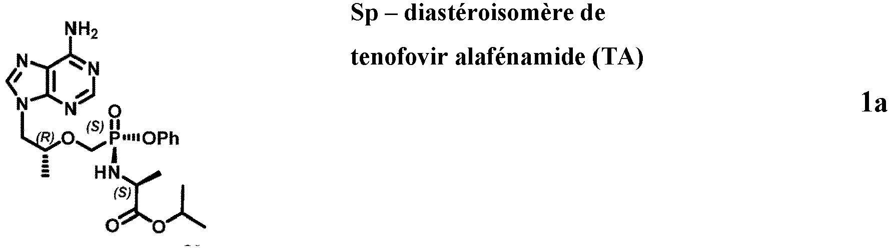 **caractérisé en ce qu'**il comprend une réaction du sel diastéréomériquement enrichi du chlorodérivé de la formule 7 avec le composé de la formule 6, où le procédé de préparation du sel diastéréomériquement enrichi du chlorodérivé de la formule 7 est selon la revendication 1.

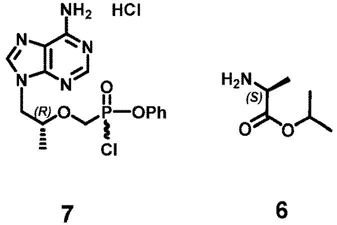

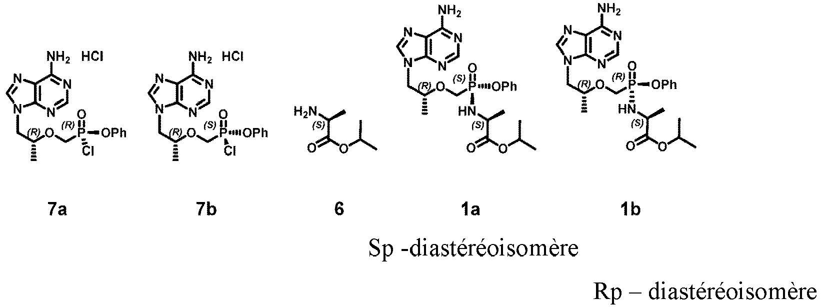

4. Procédé selon la revendication 3, dans lequel la réaction du sel diastéréomériquement enrichi du chlorodérivé de la formule 7 préparé selon le procédé de la revendication 1 avec le composé de la formule 6 est un solvant aprotique polaire, sélectionné parmi le MeOAc, EtOAc, nPrOAc, iPrOAc et nBuOAc, ou dans leur mélange, à la température de -20 °C à +5 °C.

5. Procédé de préparation selon la revendication 3 ou 4, **caractérisé en ce que** l'intermédiaire 7 diastéréomériquement enrichi est mis à réagir avec les composés de la formule 6 en présence d'une base.

6. Procédé de préparation selon la revendication 5, **caractérisé en ce que** la base est une amine tertiaire.

7. Procédé de préparation selon la revendication 6, **caractérisé en ce que** l'amine tertiaire est sélectionnée parmi le groupe de triéthylamine-TEA, éthyldiisopropylamine-EDIPA, 1,8-diazabicyclo[5.4.0]undéc-7-ène-DBU ou 1,5-diazabicyclo[4.3.0]non-5-ène-DBN, de préférence de la triéthylamine-TEA.

8. Procédé de préparation selon les revendications 5 à 7, **caractérisé en ce que** la quantité de la base par rapport au composé de la formule 7 est de 1:1 à 1:10, de préférence de 1,0:4,0.

9. Procédé de préparation selon la revendication 4, **caractérisé en ce que** le produit de la formule la est isolé par cristallisation d'un solvant aprotique polaire sélectionné parmi le groupe d'esters d'acide carboxylique, qui sont du MeOAc, EtOAc, nPrOAc, iPrOAc ou nBuOAc.

10. Procédé de préparation selon la revendication 9, **caractérisé en ce que** le solvant est du iPrOAc.
